# EUROPEAN PATENT SPECIFICATION

(11) **EP 2 217 391 B1**
(45) Date of publication and mention of the grant of the patent: **30.01.2013**
(21) Application number: 08855705.3
(22) Date of filing: 01.12.2008
(51) Int. Cl.: B09C 1/10, B09C 1/00, C02F 3/00

(54) **UNDERGROUND IN SITU BIOREMEDIATION USING SITE-SPECIFIC MICROORGANISMS**
ORTSSPEZIFISCHE MIKROORGANISMEN VERWENDENDE BIOLOGISCHE IN-SITU-UNTERGRUNDSANIERUNG
BIODÉPOLLUTION IN SITU SOUTERRAINE UTILISANT DES MICRO-ORGANISMES SPÉCIFIQUES DE SITE

(30) Priority: 29.11.2007 EP 07121846
(43) Date of publication of application: 18.08.2010
(73) Proprietor: Cleanfield Danmark ApS, 2820 Gentofte (DK)
(72) Inventor: PERMILD, Erik, DK-2900 Hellerup (DK); MOGENSEN, Anders Skibsted, DK-2000 Frederiksberg (DK)
(74) Representative: Høiberg A/S
(86) International application number: PCT/EP2008/066521
(87) International publication number: WO 2009/068684

(56) References cited:
- EP-A- 0 625 126
- WO-A-2006/136177
- US-A- 5 221 159
- US-A1- 2002 015 991
- US-B1- 6 203 703
- DATABASE WPI Section Ch, Week 200723 Thomson Scientific, London, GB; Class D15, AN 2007-225235 XP002479352 CSISZAR C; MATT M; SZEKANYNE U M; TOTH J; VARGA J: "Bio-remedial procedure for removing halogenated hydrocarbon involves use of facultative anaerobic microbes isolated from environment to be remediated or from environment having similar geochemical features" & HU 0 500 412 A1 (BIOKOER TECHNOLOGIAI ES KOERNY [HU]) 28 November 2006 (2006-11-28)

## Description

The present invention relates to a method for the bioremediation of contaminated subsurface environments, wherein site-specific indigenous microorganisms are retrieved from the contaminated site, enriched ex situ, and subsequently re-introduced into the contaminated subsurface environment in situ.

In modern industrialized societies, contaminated subsurface environments are one of the major threats to human and environmental health. Toxic pollutants such as petroleum hydrocarbons, organic solvents, pesticides, or heavy metals put vital resources at stake. These resources are most frequently drinking water supplies, agricultural soils, and a healthy indoor climate.

Some of the most frequently encountered challenges in clean-up of contaminated subsurface environments are toxic, recalcitrant and/or persistent pollutants. Furthermore, physical access to subsurface contaminants is often complicated and costly, thus limiting the use of ex situ remediation efforts such as pump-and-treat or excavation technologies.

Consequently, the use of contaminant-degrading microorganisms for site clean-up, an approach known as bioremediation, has become increasingly popular. The last decades have seen the discovery of numerous microbial strains and consortia that are capable of degrading and de-toxifying groundwater contaminants. In this context, aerobic microbial metabolism, i.e. contaminant-breakdown catalyzed by oxygen-consuming microbes, often plays an important role.

A well-known approach of bioremediation is the addition of biostimulants such as carbon sources, electron acceptors or more complex nutritional mixtures and stimulants to the environment of interest. This measure is supposed to stimulate growth of the site-specific indigenous microflora, thereby ideally increasing rates of microbial contaminant degradation.

European Patent No. 625126 discloses a method for in situ remediation of contaminated subsurface soil or groundwater contaminated by chlorinated hydrocarbons. The method is based on supplying nutrients and oxygen to the subsurface and thereby stimulating microbial growth and degradation capabilities. Similarly, US Patent No. 6488850 discloses a method that comprises the supply of a butane substrate to a contaminated site for stimulating pollutant-degrading microorganisms.

The main disadvantage of these concepts is that a substantial amount of the added stimulant (e.g., nutrients, organic substrates) may not be utilized by the indigenous microflora due to insufficient cell numbers (especially at the beginning of the remediation effort). Consequently, the unused fraction of stimulant may undergo undesirable sorption- and redox-reactions with the subsurface sediment and/or organic matter leading to inefficiency and increasing costs. Furthermore, excess nitrogen- and/or phosphorous-containing nutrients may lead to water quality problems such as eutrophication of nearby surface waters.

Another well-known approach in bioremediation is the introduction of microorganisms capable of degrading one or more contaminants in the polluted subsurface. This is frequently combined with the above-mentioned nutritional amendments. The microorganisms at use are often highly specialized enriched microbial cultures and isolates that have previously demonstrated their degradative abilities. An example is the composition and method disclosed in European Patent No. 1352977. Here, novel microbial species of the Desulfitobacterium genus are presented that are capable of dehalogenating halogenated organics in the subsurface.

A major drawback of this approach is that microorganisms that perform well under defined laboratory conditions often perform poorly when subjected to site-specific environmental in situ conditions and indigenous microfloras. The main reason is that a stable microflora is often a well-balanced biocoenosis characterized by various interdependencies between different microbial species. Consequently, newly introduced strains that are not adapted to the well-balanced microecology of a given site may well face physico-chemical and/or ecological conditions that ultimately limit their performance and survival. This again will result in increased costs and prolonged time frames necessary for site clean-up.

US Patent No. 5221159 discloses a method for removing contaminants from soil and groundwater by extracting microorganisms natural to the contaminated site, isolating at least one microorganism capable of biodegrading the contaminants, fermenting the isolate(s), and finally re-introducing it/them into the subsurface. This invention overcomes the problems involved in introducing previously absent microorganisms to a contaminated site.

However, a problem in this respect is the isolation step that may lead to a poorly balanced microflora and ultimately to unsatisfactory degradation rates. Isolating one or more microbial species followed by producing the isolates in great cell numbers, and finally re-introducing the isolate(s) to their previously well-balanced biocoenosis may compromise the ecological balance of the microflora and, more importantly, potentially limits its biodegradative performance. Furthermore, microbiological isolation and purification techniques may be time-consuming and costly.

Japanese Patent No. 2004181314 discloses a method for the decomposition of soil contaminants by soil microorganisms that are present in the soil of interest. This method, however, is an ex situ approach that requires costly mechanical operations such as excavation, stirring, and mixing of soil material.

Hungarian Patent application No. 0500412 discloses a method for introducing a microbial consortium retrieved from the environment to be remediated to areas contaminated with halogenated hydrocarbons. However, this method targets anaerobic microorganisms.

Thus, it is a first aspect of the present invention to provide a bioremediation method that allows for in situ treatment of a contaminated site.

It is a second aspect of the present invention to provide a bioremediation method that allows for an efficient microbial uptake of bio-stimulants that are added to the subsurface.

It is a third aspect of the present invention to provide a bioremediation method that makes use of a simple and cost-effective ex-situ approach for enriching microbial biodegraders from the subsarface environment of interest.

It is a fourth aspect of the present invention to provide a bioremediation method that targets aerobic microbial biodegraders.

It is a fifth aspect of the present invention to provide a bioremediation method that makes use of the indigenous microflora present at the site of interest.

The new and unique way in which the current invention fulfils one or more of the above-mentioned aspects is to provide a method for cleaning a contaminated subsurface environment, said method comprising the steps of, (a) obtaining one or more samples from the contaminated subsurface environment for providing a microbial inoculum, (b) placing each sample into an aerated continuous stirred-tank reactor (CSTR) fed with a feed solution for obtaining an enriched microbial consortium, (c) re-introducing the enriched microbial consortium into the contaminated subsurface environment.

In step (a), an inoculum is obtained by sampling the contaminated subsurface environment to be cleaned. Environments of interest may be polluted aquifers, soils, former landfill sites or the like. One or more solid and/or aqueous samples from the contaminated subsurface environment are obtained by conventional sampling techniques. The samples may include groundwater samples, soil samples, sediment samples of an aquifer or mixtures thereof.

In step (b), an enriched microbial consortium is obtained from the inoculum by using an aerated CSTR. One or more subsurface samples may be placed into the CSTR. The feed solution for the CSTR may be soil water or groundwater from the contaminated subsurface environment. Alternatively, the feed solution may be a synthetic medium supporting microbial growth. In other embodiments, the feed solution may be a combination of water derived from the contaminated subsurface environment and one or more nutrients or microbial growth supporting compounds. Typically, the residence time in the CSTR will be around 24-36 hours, however, the residence time may be adjusted to fall outside of this range. The effluent of the CSTR will advantageously be collected for further use. Aeration of the CSTR may be provided by any method known in the art, as for example described in James A. Mueller, William Charles Boyle, H. Johannes Pöpel: Aeration: Principles and Practice, CRC Press, 2002.

It is important to note that the enriched microbial consortium is different from a pure isolated culture. The latter features exclusively bacteria of a given species or strain, while the consortium of the present invention deliberately maintains, or at least mimics, the microbial community present at the contaminated subsurface environment.

In step (c), the enriched microbial consortium is re-introduced into the contaminated subsurface environment. This may be achieved by simply re-introducing the collected effluent from the CSTR. Alternatively, or in addition, the content of the CSTR may be partly or completely introduced into the subsurface environment. This may be achieved by lance injection, horizontal drilling, well-injection or combinations thereof.

The method of the present invention allows for the exploitation of the natural microbial degradation potential without having to introduce excess biostimulants into the subsurface. By means of growing and enriching the microbial population ex situ in a CSTR, under controlled conditions, the subsequent biostimulant demand decreases considerably. Introducing large amounts of biostimulants as the initial step of bioremediation thus becomes unnecessary since the initial biomass is already enriched and stimulated.

Furthermore, the said simple method for growing and enriching the indigenous microbial consortium of a given contaminated site obviates time-consuming and costly analysis, isolation, and purification of distinct microbial strains. The present method takes advantage of the fact that single microbial strains often function best in their original microbial consortium or biocoenosis.

According to a preferred embodiment the method of the present invention further comprises the steps of (i) injecting oxygen into the contaminated subsurface environment, (ii) allowing for depletion of the injected oxygen within the contaminated subsurface environment, (iii) repeating steps (i) and (ii) at least once, wherein steps (i), (ii), and (iii) precede step (a). According to a particularly preferred embodiment, steps (i) and (ii) are repeated twice in total. These embodiments target facultative anaerobic microorganisms, that is, microorganisms that grow both at oxygen-rich conditions and at oxygen-depleted conditions. These microorganisms are particularly useful in bioremediation and site clean-up since they may oxidize organic pollutants regardless of the redox state and oxygen supply of a subsurface environment. The use of three aerobic/anaerobic cycles prior to sampling of the subsurface environment typically yields satisfactory recovery of facultative anaerobes. Beneficial results are achieved with several alternating anaerobic/aerobic cycles over a total period of 30 to 60 days. Oxygen may be injected by any suitable technique known in the art, for example, by pumping atmospheric air into the subsurface. Alternatively, pure oxygen, oxygen-rich solutions or oxygen-releasing compounds may be introduced.

In step (ii) depletion of the injected oxygen is allowed. Depletion, occurs, besides other factors, due to microbial consumption of oxygen for respiratory processes. Depletion may be monitored by using one or more oxygen sensors, such as an oxygen electrode. As used herein, the term "depletion" refers to a situation where the oxygen concentration in the subsurface, for example in the groundwater, is substantially the same as, or lower than, prior to oxygen injection. In this context, "substantially the same" includes values that lie up to 1 mg oxygen per litre water above the oxygen concentration prior to oxygen injection. Oxygen depletion may be measured with respect to a confined and pre-defined spatial area or location of the contaminated subsurface environment, as for example defined by one or more sampling points or boreholes. According to another embodiment of the present invention a microbial growth medium is supplied to the subsurface environment during at least one of the steps (i)-(iii). The growth medium may be any conventional microbial growth medium known in the art. It will typically comprise sources of carbon, nitrogen, phosphorous, potassium, trace metals, vitamins and the like. Providing a growth medium will promote the formation of a vital and strong microbial community including facultative anaerobes. According to a preferred embodiment the microbial growth medium comprises at least 50 millimol potassium per litre of medium, which typically is a useful composition for achieving the above-mentioned effects.

According to another embodiment of the present invention the feed solution comprises soil water or groundwater derived from the contaminated subsurface environment, wherein the feed solution is supplemented with at least 50 millimol potassium per litre of feed solution. This combination will typically result in beneficial growth rates and compositions of microbial consortia. When using soil water or groundwater derived from the subsurface environment of interest, the microorganisms present in the CSTR are subjected to chemical conditions similar to their subsurface environment, which often results in good microbial growth.

According to an expedient embodiment of the present invention the method further comprises the following steps which succeed step (b): (iv) obtaining one or more additional samples from the contaminated subsurface environment for providing microcosm material, (v) preparing one or more microcosms using the material obtained in step (iv), (vi) supplying each microcosm with the enriched microbial consortium obtained in step (b), and (vii) monitoring microbial activity in each microcosm by measuring the time-dependent concentration of one or more compounds herein, where the compounds are selected from the group consisting of methane, carbon dioxide and oxygen. After having obtained the enriched consortium in step (b) the contaminated subsurface environment is sampled again, preferably shortly before the enriched consortium is re-introduced according to step (c). One or more microcosms are then prepared by using approaches known in the art. For example, a sediment sample may be placed into a serum bottle together with groundwater or soil water sampled from subsurface environment. The enriched consortium is then added, optionally together with nutrients, one or more contaminants, oxygen, reducing agents or the like. Microbial activity in the microcosm is then monitored by, for example, measuring oxygen and carbon dioxide in the gas phase over time. By setting up this type of microcosms, prior to, or simultaneously with, the in re-introduction step, a cost-effective and straightforward method for probing and/or monitoring is provided. The parallel microcosms may give an indication of possible processes taking place in the subsurface environment. Thereby the potential of the enriched microbial consortium can be roughly evaluated. During the field-scale remediation effort, sampling of the field site may actually be reduced using this approach, since the microcosms may give a rough indication of the state of the subsurface environment. As used herein, the term "simultaneously with re-introducing" should be understood as covering all embodiments where the introduction of the enriched consortium into the microcosms takes place in an interval ranging from six hours before to six hours after step (c). The monitored concentration of methane, carbon dioxide and/or oxygen may be the aqueous and/or the gaseous concentration of these compounds. The microcosms will typically be subjected to conditions similar to the ones prevailing at the subsurface of interest, including temperature, contaminant concentration, oxygen supply and the like.

According to a another embodiment of the present invention the method further comprises the following steps which succeed step (b) and precede step (c): (viii) harvesting and drying the enriched microbial consortium, and (ix) dissolving and regenerating the dried microbial consortium in a regeneration solution having a temperature lying in an interval ranging from 5°C below to 5°C above the average temperature of the contaminated subsurface environment. For treating a site with an average groundwater temperature of, for example, 10°C the regeneration step should accordingly be carried out at between 5-15°C, most preferably at, or close to, 10°C. The average temperature can be a daily, weekly, monthly, or yearly temperature, but preferably represents the average temperature of the subsurface environment at the time of conducting the method. Using this approach gives the method a higher degree of flexibility since the enriched consortium does not necessarily have to be re-introduced immediately after its provision.

The harvesting and drying step may be achieved by using standard techniques well known in the art. This may involve centrifugation, washing and freeze-drying. Once the consortium is dried there is not immediate time-pressure involved in nurturing the consortium. Accordingly, additional amounts of the consortium may be produced in the meantime, if required. Whenever convenient, the dried consortium may be re-dissolved in a regeneration solution, which may contain phosphate, ammonium, potassium and chloride. The consortium is dissolved in the regeneration solution, for example by mixing with a magnetic stirrer or the like. Advantageously, the pH of the solution is adjusted to circumneutral values. A carbon source may be added, and consumption of the same may be monitored, for example by measuring dissolved oxygen in the solution. Upon active consumption of the carbon source dissolved oxygen concentrations will decrease. Carbon sources may be fed repeatedly. Advantageous carbon sources include compounds that are present at the contaminated subsurface environment of interest. This may include petroleum hydrocarbons, such as alkanes, alkenes, aromatics or mixtures thereof.

In an expedient embodiment of the present invention the temperature of the CSTR and its contents is maintained in an interval ranging from 5°C below to 5°C above the average temperature of the contaminated subsurface environment. This will advantageously contribute to forming a microbial consortium that is, and stays, well-adapted to the in situ temperature of the contaminated subsurface environment. Advantageously, adding oxygen in the form of atmospheric air or oxidizing agents such as hydrogen peroxide to the subsurface may accompany the method of the present invention. Thereby, the increased oxygen demand of the enriched microbial consortium can be met and limitations to the biodegradation rate may be avoided.

Typically, the said method will involve the addition of a suitable biostimulant to the subsurface in order to maintain an active degrading microflora. This biostimulant traditionally comprises one or more dissolved nitrogen-, phosphorous- and/or potassium-containing compounds. These macronutrients are essential for microbial metabolism and cell growth. Furthermore, the addition of micronutrients such as trace minerals, vitamins and the like, is desirable to promote a viable microbial population.

One of the major advantages of the present invention is the fact the contaminant degradation by the action of the enriched microbial consortium takes place in situ and therefore does not require costly ex situ techniques such as excavation of soil or aquifer material.

The feed solution will typically be an aqueous medium with several nutritional amendments. These are nutrients such as dissolved nitrogen, phosphorous and/or potassium species and/or micronutrients such as trace minerals and/or vitamins. The latter may conveniently be purchased as commercially available domestic plant fertilizer. Another conceivable amendment to the medium could be another organic substrate as a carbon source.

In a preferred embodiment of the present invention, the group consisting of ammonium, nitrate and their respective aqueous complexes makes up at least 50 wt % of all solutes of the feed solution. Most preferably the same group makes up at least 80 wt% of all solutes of the aqueous solution. This relatively high proportion of inorganic nitrogen species has shown advantageous results in the enrichment step. An according feed solution may be produced by dissolving ammonium nitrate together with other constituents in distilled water.

Furthermore, the feed solution may advantageously contain at least one contaminant present in the contaminated subsurface environment of interest. Thereby it is ensured that contaminant-degrading and/or -tolerant microbial species are supported by the incubation conditions. If the contaminants at the site of interest include, or are dominated, by petroleum hydrocarbons, the feed solution may be supplemented with diesel or unleaded petrol.

The CSTR is normally maintained at a temperature close to the in situ temperature of the contaminated subsurface environment of interest. This has the advantage of subjecting the microbial community to conditions that are very similar to their natural habitat. Thereby it is ensured that there will be no substantial loss in activity or degradative capacity upon re-introduction of the consortium into the subsurface.

The class of subsurface contaminants targeted by the present method will typically be organic compounds, for example, but not exclusively, petroleum hydrocarbons and/or organic solvents. These substances are typically readily biodegradable by the action of aerobic microorganisms. Microbial consortia, enrichment cultures or isolates that are capable of partly or completely oxidizing these substances have been discovered in numerous subsurface environments. The idea of exploiting this capacity of aerobic microbial metabolism is especially attractive since oxygen in the form of atmospheric air may be readily and cost-efficiently introduced into the subsurface.

There are several known techniques by which the enriched microbial consortium may be re-introduced into the contaminated subsurface environment. Typically, one or more of the following techniques will accomplish this: lance injection, horizontal drilling, and/or well-injection. It is obvious for the person skilled in the art that the choice of the appropriate technique will depend on a number of parameters such as depth, accessibility, and the spatial spread of the contamination.

In a preferred embodiment of the present invention the method further comprises the step of applying a washing solution comprising at least one detergent to the contaminated subsurface environment prior to re-introducing the enriched microbial consortium. This additional step has demonstrated particularly efficient site clean-up, owing to this specific combination of steps.

The invention will be explained in greater detail below where further advantageous properties and example embodiments are described with reference to the examples and drawings.

### Figures

Fig. 1 shows a graph depicting hydrocarbon concentrations (ordinate) versus time (abscissa).
Fig. 2 shows a graph depicting hydrocarbon concentrations (ordinate) versus time (abscissa) for a microbial suspension according to the invention compared to a conventional microbial suspension and degradation without a microbial suspension.

According to another embodiment of the present invention one or more contaminants are added to the liquid phase that is used for preparing the slurry and for flowing into the CSTR. Advantageously, the said contaminants may be chosen in such a way as to match the predominant and/or relevant contaminants at the site that is to be remediated according to the present invention. The said contaminants may be organic compounds, for example one or more petroleum hydrocarbons.

According to a further embodiment of the present invention the equipment used in the laboratory and/or in the field, for example the CSTR, potential tubing, and a potential reservoir for the inflow solution, is sterilized prior to its use, for example by autoclaving.

### Examples

### Example 1: Sampling and incubation of contaminated soil

A mass of approximately 2 kilograms of contaminated soil was sampled from a contaminated site. The soil was sampled at a depth of about 1.5 meters below surface. Soil sampling was performed according to the following published guidelines and recommendations,
- Grøn et al. (2003) Håndbog i prøvetagning af jord og grundvand, Nr.3, Amternes Videncenter for Jordforurening (AJV), Teknik og Administration (in Danish)
- Miljøstyrelsen (2003) Liste over kvalitetskriterier i relation til forurenet jord (opdateret 2005), som tillæg til Miljøstyrelsens Vejledning nr. 6 1998: Oprydning på forurenede lokaliteter (in Danish)
- Miljøstyrelsen (2000) Miljøprojekt 579. Udvikling af metode til testning af udvaskning af organiske stoffer fra jord og restprodukter (in Danish)

The obtained soil sample was analyzed for pentane-extractable hydrocarbons. The analysis showed that the sample contained approximately 8800 milligrams carbohydrates (fraction benzene-C35) per kilogram dry mass.

The soil sample was mixed with about 5 liters of tap water to produce a slurry. Tap water may contain the following constituents at their respective concentrations; 170 milligrams NaHCO₃ per liter, 50 milligrams MgCl₂ per liter, 210 milligrams CaCl₂ per liter; Di Gabriele & Scantlebury (2003) Corrosion Behaviour Of Magnesium Sacrificial Anodes In Tap Water, The Journal of Corrosion Science and Engineering, Vol 4, Preprint 4. Tap water may furthermore have a circumneutral pH value of around 7.

Tap water may be replaced by a nutrient medium containing essential growth factors necessary for microbial growth. A contemplated growth medium comprises proteose peptone, glycerol, K₂HPO₄, MgSO₄ 7H₂O, agar, and distilled water. Other contemplated constituents of the medium include iron compounds, yeast extract, fatty acids, and tryptone. A person skilled in the art will easily be able to choose an appropriate medium based on the experimental requirements, for example based on which microbes or microbial groups are targeted. In one embodiment according to the current invention bacteria of the genus *Pseudomonas* are targeted. A useful overview of different media may be found in the "Handbook of Microbiological Media", 3rd edition, by Ronald M. Atlas (Author), Lawrence C. Parks (Editor), CRC Press, 2004.

The *Pseudomonas* can in a preferred embodiment comprise the microorganism *Pseudomonas putida,* as this microorganism is capable of remedying naphthalene-contaminated soils.

A subsample of about 0.5 kilograms of the afore-mentioned slurry was incubated in a CSTR at a temperature of 20°C. The incubation temperature may well be adjusted to the specific subsurface temperature of the given contaminated site. Also, the incubation temperature may be advantageously increased to temperatures above 20°C, such as for example 30°C or 37°C for increasing the rate of microbial growth.

A continuous inflow of tap water into the CSTR was established at a flow rate of around 15 to 20 milliliters per hour. A continuous outflow of the liquid phase within the CSTR was also established, roughly matching the inflow. A person skilled in the art will be able to adjust the flow rate according to the experimental conditions and requirements, such as the microbial growth rate.

Furthermore, the CSTR was aerated during operation for promoting growth of aerobic bacteria. Aeration was achieved by sparging of sterile pressurized air.

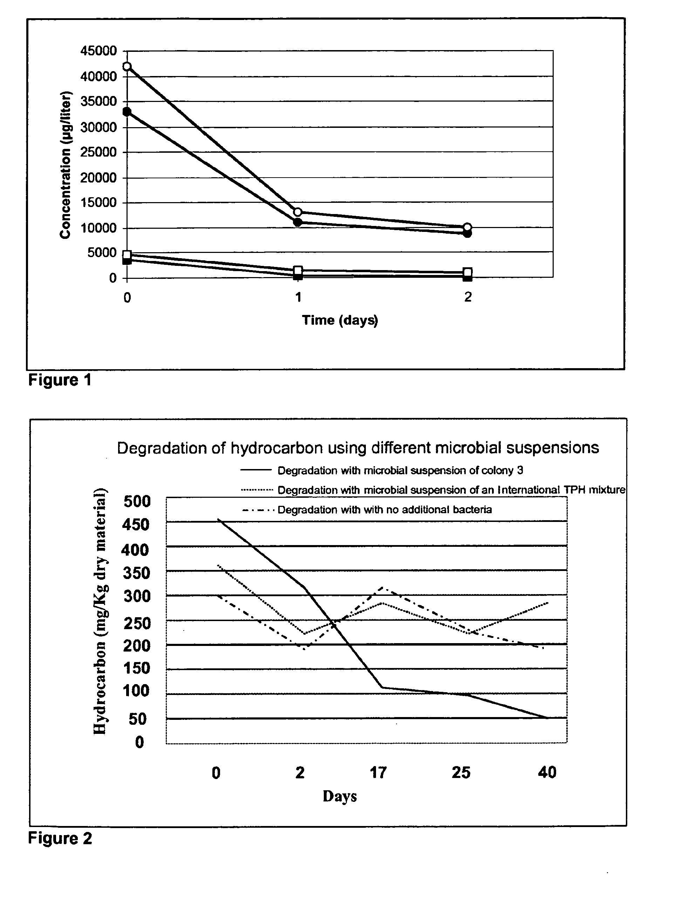

An aqueous sample was taken from the CSTR every day starting at the first day of incubation. Fig. 1 shows aqueous concentrations of different hydrocarbons over time. In Fig. 1 closed squares indicate hydrocarbons of the benzene-C10 fraction, closed circles indicate hydrocarbons of the C10-C25 fraction, open squares indicate hydrocarbons of the C25-C35, and open circles indicate the sum of the three aforementioned hydrocarbon fractions. Aqueous phase concentrations in Fig. 1 are corrected for dilution effects by tap water flowing into the CSTR.

The data shown in Fig. 1 span a time interval of two days and demonstrate successful biodegradation of hydrocarbons on this time scale. The initial aqueous concentration of hydrocarbons was about 42000 micrograms per liter (sum of the three aforementioned hydrocarbon fractions). Within the shown time period of two days this concentration dropped to a final value of about 10000 micrograms per liter.

Furthermore, the microbial community present in the CSTR was analyzed. Slurry samples were taken after two full days of operation of the CSTR. The samples were incubated on Tryptic Soy Agar (TSA) and cetrimide agar at 20°C. Microbial colonies were identified by DNA-sequencing of 16S rDNA fragments. Obtained sequences were compared with known sequences saved in GenBank of the National Center for Biotechnology Information, U.S. National Library of Medicine, the Nucleotide Sequence Database of the European Molecular Biology Laboratory (EMBL), the DNA Database of Japan (DDBJ), and the Protein Data Bank (PDB) of the Research Collaboratory for Structural Bioinformatics (RCSB) using BLAST (Basic Local Alignment Search Tool of the National Center for Biotechnology Information, U.S. National Library of Medicine, 8600 Rockville Pike, Bethesda, MD 20894).

Table 1 shows the results from different colonies.

The incubated slurry and/or the aqueous outflow from the CSTR may be used for injection into the subsurface and subsequent bioremediation. Prior to injection the slurry and/or the aqueous outflow solution may be pre-treated, for example for removal of contaminants or other substances. Other contemplated pre-treatment steps include purification, concentration, enrichment and/or amendment with microbial growth factors.

**Table 1**

| **Sample name** | **Result** |
|---|---|
| Colony 1, TSA | 611 basepairs: 100% match with *Pseudomonas putida* J5 |
| Colony 2, TSA | 709 basepairs: 100% match with *Comamonas testosteroni* NCIMB 10643 |
| Colony 3, TSA | 654 basepairs: 100% match with *Pseudomonas lini* KNUC164, *Ps. Fluorescens* PC17 and *Ps. Mandelii* CIP 105273 |
| Colony 4, TSA | 704 basepairs: 100% match with *Delftia acidovorans* EEZ23 |
| Colony 5, cetrimide | 701 basepairs: 100% match with *Pseudomonas putida* ATCC 17642 |
| Colony 7, TSA | 464 basepairs: *Rhodococcus erythropolis* ATCC 55310 and Rh. *Boritolerans* BTM-6B |

A person skilled in the art will understand that the amounts, volumes, and masses referred to above may be adjusted according to case-specific conditions and requirements. The amount of soil slurry incubated in the CSTR may easily be increased by a factor of 10 or more. The flow rate of the liquid flowing into the CSTR may be increased accordingly.

### Example 2: Regenerating the dried microbial consortium

A regenerating solution for dissolving and regenerating the dried microbial consortium was prepared by providing 10 liters of water in a tank. The temperature of the water was adjusted to 11°C, (preferably the water is 10°C ± 2°C) thereby simulating the temperature conditions in the subsurface of interest. The following components were added and dissolved in the water:
- 300 grams of diammonium phosphate
- 30 grams of potassium phosphate dibasic dihydrate
- 25 grams of monobasic potassium phosphate
- 80 grams of ammonium chloride
- 30 grams of sodium chloride

A mass of 1.5 kg of dried microbial consortium according to the present invention was dissolved in the solution. Ambient air with a flow of 90 L/h was bubbled through the solution to achieve a dissolved oxygen concentration of about 10 mg per liter. The pH was adjusted to between 6.5 and 7.0. 150 ml of unleaded contaminated pore water were added, whereupon dissolved oxygen concentrations dropped within 24 hours. When dissolved oxygen concentrations rose again, hydrocarbons to a concentration of 1900 mg/L were added. Once the hydrocarbon concentration was degraded to 0.6 mg/L the microbial suspension was ready for application to the subsurface. Microbial plate counts of samples taken from the ready suspension were around 10⁸ CFUs per milliliter.

### Example 3: Comparative example

Three samples of 100 ml soil containing contamination with total petroleum hydrocarbon (TPH) were prepared. Total petroleum hydrocarbons (TPH) are a term used to describe a large family of several hundred chemical compounds that originally come from crude oil.

A microbial suspension of colony 3 disclosed in table 1 was provided using the procedure described example 2. 10 ml of the suspension was added to the first sample. 10 ml of a conventional microbial suspension conventionally used to degrade TPH was added to the second sample and the third sample was left as a control.

As is evident from fig. 2 there is not only a prompt degradation using the microbial suspension according to the invention, the degradation is also completed much faster than with the conventional methods.

## Claims

1. A method for cleaning a contaminated subsurface environment, said method comprising the steps of
a) obtaining one or more samples from the contaminated subsurface environment for providing a microbial inoculum,
b) placing each sample into an aerated continuous stirred-tank reactor (CSTR) fed with a feed solution for obtaining an enriched microbial consortium,
c) re-introducing the enriched microbial consortium into the contaminated subsurface environment.

2. The method according to claim 1, **characterized in that** the method further comprises the following steps which precede step (a),
(i) injecting oxygen into the contaminated subsurface environment,
(ii) allowing for depletion of the injected oxygen within the contaminated subsurface environment, and
(iii) repeating steps (i) and (ii) at least once.

3. The method according to claim 2, **characterized in that** steps (i) and (ii) are repeated twice in total.

4. The method according to claims 2 or 3, **characterized in that** a microbial growth medium is supplied to the subsurface environment during at least one of the steps (i)-(iii).

5. The method according to claim 4, **characterized in that** the microbial growth medium comprises at least 50 millimol potassium per liter of medium.

6. The method according to any one of claims 1-5, **characterized in that** the feed solution comprises soil water or groundwater derived from the contaminated subsurface environment, wherein the feed solution is supplemented with at least 50 millimol potassium per liter of feed solution.

7. The method according to any one of claims 1-6, **characterized in that** the method further comprises the following steps which succeed step (b):
(iv) obtaining one or more additional samples from the contaminated subsurface environment for providing microcosm material,
(v) preparing one or more microcosms using the material obtained in step (iv),
(vi) supplying each microcosm with the enriched microbial consortium obtained in step (b), and
(vii) monitoring microbial activity in each microcosm by measuring the time-dependent concentration of one or more compounds herein, where the compounds are selected from the group consisting of methane, carbon dioxide and oxygen.

8. The method according to any one of claims 1-7, **characterized in that** the method further comprises the following steps which succeed step (b) and precede step (c),
(viii) harvesting and drying the enriched microbial consortium, and
(ix) dissolving and regenerating the dried microbial consortium in a regeneration solution having a temperature lying in an interval ranging from 5°C below to 5°C above the average temperature of the contaminated subsurface environment.

9. The method according to any one of claims 1-8, **characterized in that** the temperature of the CSTR and its contents is maintained in an interval ranging from 5°C below to 5°C above the average temperature of the contaminated subsurface environment.

10. The method according to any one of claims 1-9, **characterized in that** the feed solution is an aqueous solution comprising at least one nitrogen-containing, one phosphorous-containing, or one potassium-containing compound, wherein the group consisting of ammonium, nitrate and their respective aqueous complexes makes up at least 50 wt% of all solutes of the aqueous solution..

11. The method according to claim 10, **characterized in that** the group consisting of ammonium, nitrate and their respective aqueous complexes makes up at least 80 wt% of all solutes of the aqueous solution.

12. The method according to any one of claims 1-11, **characterized in that** the feed solution comprises at least one contaminant present in the contaminated subsurface environment of interest.

13. The method according to any one of claims 1-12, **characterized in that** one or more of the subsurface contaminants are petroleum hydrocarbons.

14. The method according to any one of claims 1-13, **characterized in that** the method further comprises adding hydrogen peroxide and/or atmospheric air to the contaminated subsurface environment.

15. The method according to any one of claims 1-14, **characterized in that** the method further comprises the step of applying a washing solution comprising at least one detergent to the contaminated subsurface environment prior to re-introducing the enriched microbial consortium.

16. The method according to any one of claims 1-15, **characterized in that** the method further comprises adding a nutrient solution containing at least one dissolved nitrogen-containing, one phosphorous-containing or one potassium-containing species to the said contaminated subsurface environment prior to, during, or after the said re-introduction of the enriched consortium.

17. The method according to any one of claims 1-16, **characterized in that** the re-introduction of said enriched microbial consortium into the subsurface environment is accomplished by lance injection, horizontal drilling, and/or well-injection.

## Patentansprüche

1. Verfahren zur Reinigung eines kontaminierten Untergrunds, wobei das Verfahren die folgenden Schritte umfasst:
a) Erhalten einer oder mehrerer Proben des kontaminierten Untergrunds, um ein Mikrobeninokulum bereitzustellen,
b) Anordnen jeder Probe in einem mit Luft durchsetzten, kontinuierlichen Rührkesselreaktor (CSTR), dem eine Zugabelösung zugeführt wird, um ein angereichertes mikrobielles Konsortium zu erhalten,
c) Rückführen des angereicherten mikrobiellen Konsortiums in den kontaminierten Untergrund.

2. Verfahren nach Anspruch 1, **dadurch gekennzeichnet, dass** das Verfahren weiterhin die folgenden Schritte, die dem Schritt (a) vorausgehen, umfasst:
(i) Injizieren von Sauerstoff in den kontaminierten Untergrund,
(ii) Entzehren lassen des injizierten Sauerstoffs im kontaminierten Untergrund, und
(iii) Wiederholen der Schritte (i) und (ii) wenigstens einmal.

3. Verfahren nach Anspruch 2, **dadurch gekennzeichnet, dass** die Schritte (i) und (ii) insgesamt zweimal wiederholt werden.

4. Verfahren nach Anspruch 2 oder 3, **dadurch gekennzeichnet, dass** dem Untergrund während wenigstens einem der Schritte (i) - (iii) ein mikrobielles Wachstumsmedium zugeführt wird.

5. Verfahren nach Anspruch 4, **dadurch gekennzeichnet, dass** das mikrobielle Wachstumsmedium wenigstens 50 Millimol Kalium pro einen Liter des Mediums aufweist.

6. Verfahren nach einem der Ansprüche 1 bis 5, **dadurch gekennzeichnet, dass** die Zugabelösung Bodenwasser oder Grundwasser aufweist, welches aus dem kontaminierten Untergrund stammt, wobei die Zugabelösung durch wenigstens 50 Millimol Kalium pro einen Liter der Zugabelösung ergänzt wird.

7. Verfahren nach einem der Ansprüche 1 bis 6, **dadurch gekennzeichnet, dass** das Verfahren weiterhin die folgenden Schritte, die nach Schritt (b) folgen, umfasst:
(iv) Erhalten einer oder mehrerer zusätzlicher Proben von dem kontaminierten Untergrund, um ein mikrokosmisches Material bereitzustellen,
(v) Vorbereiten eines oder mehrerer Mikrokosmen unter Verwendung des in Schritt (iv) erhaltenen Materials,
(vi) Zuführen jedem Mikrokosmos des in Schritt (b) erhaltenen angereicherten mikrobiellen Konsortiums, und
(vii) Beobachten der mikrobiellen Aktivität in jedem Mikrokosmos durch das Messen der zeitabhängigen Konzentration einer oder mehrerer Verbindungen darin, wobei die Verbindungen ausgewählt werden aus einer Gruppe bestehend aus Methan, Kohlendioxid und Sauerstoff.

8. Verfahren nach einem der Ansprüche 1 bis 7, **dadurch gekennzeichnet, dass** das Verfahren weiterhin die folgenden Schritte, die nach Schritt (b) folgen und Schritt (c) vorausgehen, umfasst:
(viii) Ernten und Trocknen des angereicherten mikrobiellen Konsortiums, und
(ix) Auflösen und Regenerieren des getrockneten mikrobiellen Konsortiums in einer Regenerationslösung mit einer Temperatur, die sich in einem Intervall von 5°C unter bis 5°C über der Durchschnittstemperatur des kontaminierten Untergrunds bewegt.

9. Verfahren nach einem der Ansprüche 1 bis 8, **dadurch gekennzeichnet, dass** die Temperatur des CSTR und dessen Inhalte innerhalb eines Intervalls, das von 5°C unter bis 5°C über der Durchschnittstemperatur des kontaminierten Untergrunds reicht, aufrechterhalten wird.

10. Verfahren nach einem der Ansprüche 1 bis 9, **dadurch gekennzeichnet, dass** die Zugabelösung eine wässrige Lösung ist, die wenigstens eine stickstoffhaltige, eine phosphorhaltige oder eine kaliumhaltige Verbindung aufweist, wobei die Gruppe bestehend aus Ammonium, Nitrat und deren jeweilige wässrige Komplexe wenigstens 50 Gew.-% aller gelösten Substanzen der wässrigen Lösung ausmachen.

11. Verfahren nach Anspruch 10, **dadurch gekennzeichnet, dass** die Gruppe bestehend aus Ammonium, Nitrat und deren jeweiligen wässrigen Komplexe wenigstens 80 Gew.-% aller gelösten Substanzen der wässrigen Lösung ausmachen.

12. Verfahren nach einem der Ansprüche 1 bis 11, **dadurch gekennzeichnet, dass** die Zugabelösung wenigstens eine Verunreinigung aufweist, die in dem zu untersuchenden kontaminierten Untergrund vorhanden ist.

13. Verfahren nach einem der Ansprüche 1 bis 12, **dadurch gekennzeichnet, dass** es sich bei einer oder mehreren der Verunreinigungen des Untergrunds um Erdölkohlenwasserstoffe handelt.

14. Verfahren nach einem der Ansprüche 1 bis 13, **dadurch gekennzeichnet, dass** das Verfahren weiterhin das Hinzufügen von Wasserstoffperoxid und/oder atmosphärischer Luft in den kontaminierten Untergrund umfasst.

15. Verfahren nach einem der Ansprüche 1 bis 14, **dadurch gekennzeichnet, dass** das Verfahren weiterhin den Schritt des Verabreichens einer Waschlösung, die wenigstens ein Detergens aufweist, dem kontaminierten Untergrund, und zwar vor der Rückführung des angereicherten mikrobiellen Konsortiums, umfasst.

16. Verfahren nach einem der Ansprüche 1 bis 15, **dadurch gekennzeichnet, dass** das Verfahren weiterhin das Hinzufügen einer Nährlösung, die wenigstens eine gelöste stickstoffhaltige, eine phosphorhaltige oder eine kaliumhaltige Spezies enthält, dem kontaminierten Untergrund, und zwar vor, während oder nach der Rückführung des angereicherten Konsortiums, umfasst.

17. Verfahren nach einem der Ansprüche 1 bis 16, **dadurch gekennzeichnet, dass** das Rückführen des angereicherten mikrobiellen Konsortiums in den Untergrund durch Lanzeninjektion, durch eine Horizontalbohrung und/oder durch Versenkung erfolgt.

## Revendications

1. Procédé de dépollution d'un environnement souterrain contaminé, ledit procédé comprenant les étapes
a) d'obtention d'un ou plusieurs échantillons de l'environnement souterrain contaminé pour fournir un inoculum microbien,
b) de placement de chaque échantillon dans un réacteur à cuve agitée aérée en continu (CSTR) alimenté avec une solution d'alimentation pour obtenir un pool microbien enrichi,
c) de réintroduction du pool microbien enrichi dans l'environnement souterrain contaminé.

2. Procédé selon la revendication 1, **caractérisé en ce que** le procédé comprend en outre les étapes suivantes qui précèdent l'étape (a),
(i) injection d'oxygène dans l'environnement souterrain contaminé,
(ii) déplétion de l'oxygène injecté dans l'environnement souterrain contaminé, et
(iii) répétition des étapes (i) et (ii) au moins une fois.

3. Procédé selon la revendication 2, **caractérisé en ce que** les étapes (i) et (ii) sont répétées deux fois au total.

4. Procédé selon la revendication 2 ou 3, **caractérisé en ce qu'**un milieu de croissance microbien est fourni à l'environnement souterrain pendant au moins l'une des étapes (i) à (iii).

5. Procédé selon la revendication 4, **caractérisé en ce que** le milieu de croissance microbien comprend au moins 50 millimoles de potassium par litre de milieu.

6. Procédé selon l'une quelconque des revendications 1 à 5, **caractérisé en ce que** la solution d'alimentation comprend de l'eau du sol ou de l'eau souterraine provenant de l'environnement souterrain contaminé, la solution d'alimentation étant fournie avec au moins 50 millimoles de potassium par litre de solution d'alimentation.

7. Procédé selon l'une quelconque des revendications 1 à 6, **caractérisé en ce que** le procédé comprend en outre les étapes suivantes qui succèdent à l'étape (b) :
(iv) obtention d'un ou plusieurs échantillons supplémentaires de l'environnement souterrain contaminé pour fournir un matériau de microcosme,
(v) préparation d'un ou plusieurs microcosmes en utilisant le matériau obtenu à l'étape (iv),
(vi) fourniture de chaque microcosme avec le consortium microbien enrichi obtenu à l'étape (b), et
(vii) surveillance de l'activité microbienne dans chaque microcosme en mesurant la concentration dépendante du temps d'un ou plusieurs composés dans celui-ci, les composés étant choisis dans le groupe comprenant le méthane, le dioxyde de carbone et l'oxygène.

8. Procédé selon l'une quelconque des revendications 1 à 7, **caractérisé en ce que** le procédé comprend en outre les étapes suivantes qui succèdent à l'étape (b) et précèdent l'étape (c),
(viii) recueil et séchage du pool microbien enrichi, et
(ix) dissolution et régénération du pool microbien séché dans une solution régénérante ayant une température se trouvant dans un intervalle allant de 5° C en dessous à 5° C au-dessus de la température moyenne de l'environnement souterrain contaminé.

9. Procédé selon l'une quelconque des revendications 1 à 8, **caractérisé en ce que** la température du CSTR et sa teneur est maintenue dans un intervalle allant de 5° C en dessous à 5° C au-dessus de la température moyenne de l'environnement souterrain contaminé.

10. Procédé selon l'une quelconque des revendications 1 à 9, **caractérisé en ce que** la solution d'alimentation est une solution aqueuse comprenant au moins un composé contenant de l'azote, un composé contenant du phosphore ou un composé contenant du potassium, dans lequel le groupe comprenant de l'ammonium, du nitrate et leurs complexes aqueux respectifs constitue au moins 50 % en poids de tous les solutés de la solution aqueuse.

11. Procédé selon la revendication 10, **caractérisé en ce que** le groupe comprenant de l'ammonium, du nitrate et leurs complexes aqueux respectifs constitue au moins 80 % en poids de tous les solutés de la solution aqueuse.

12. Procédé selon l'une quelconque des revendications 1 à 11, **caractérisé en ce que** la solution d'alimentation comprend au moins un contaminant présent dans l'environnement souterrain contaminé intéressant.

13. Procédé selon l'une quelconque des revendications 1 à 12, **caractérisé en ce qu'**un ou plusieurs des contaminants souterrains sont des hydrocarbures du pétrole.

14. Procédé selon l'une quelconque des revendications 1 à 13, **caractérisé en ce que** le procédé comprend en outre l'addition de peroxyde d'hydrogène et/ou d'air atmosphérique dans l'environnement souterrain contaminé.

15. Procédé selon l'une quelconque des revendications 1 à 14, **caractérisé en ce que** le procédé comprend en outre l'étape d'application d'une solution de lavage comprenant au moins un détergent sur l'environnement souterrain contaminé avant de réintroduire le pool microbien enrichi.

16. Procédé selon l'une quelconque des revendications 1 à 15, **caractérisé en ce que** le procédé comprend en outre l'addition d'une solution nutritive contenant au moins une espèces dissoute contenant de l'azote, une espèce contenant du phosphore ou une espèce contenant du potassium audit environnement souterrain contaminé avant, pendant ou après ladite réintroduction du pool enrichi.

17. Procédé selon l'une quelconque des revendications 1 à 16, **caractérisé en ce que** la réintroduction dudit pool microbien enrichi dans l'environnement souterrain est réalisée par injection à la lance, forage horizontal et/ou injection en puits.
